# EUROPEAN PATENT APPLICATION

(11) **EP 4 044 059 A1**
(43) Date of publication of application: **17.08.2022**
(21) Application number: 20873569.6
(22) Date of filing: 09.10.2020
(51) Int. Cl.: G06F 30/10, G06F 30/20

(54) **PROGRAM, DESIGN AIDING DEVICE, AND DESIGN AIDING METHOD**

(30) Priority: 10.10.2019 JP 2019186985; 10.10.2019 JP 2019186986
(71) Applicant: Nature Architects Inc., Tokyo 107-0052 (JP)
(72) Inventor: OHSHIMA, Taisuke, Tokyo 107-0052 (JP); TANIMICHI, Kotaro, Tokyo 107-0052 (JP); SUTO, Kai, Tokyo 107-0052 (JP); YAMAGUCHI, Soichiro, Tokyo 107-0052 (JP)
(74) Representative: Lambsdorff & Lange Patentanwälte Partnerschaft mbB
(86) International application number: PCT/JP2020/038357
(87) International publication number: WO 2021/070950

(57) **Abstract**

A program according to one aspect of the present disclosure relates to a program executed by a computer including a processor, the program causing the processor to perform: obtaining specification data indicative of a specification required for at least one of a functionality and a performance of a to-be-designed three-dimensional structure; and determining a candidate structure based on the required specification from a database, wherein a parameter describing a physical property of respective candidate structures that differ from each other in terms of at least one of a material and a structure is registered in the database.

## Description

### Technical Field

The present disclosure relates to design aiding for a three-dimensional structure.

### Background Art

In recent years, diffusion of 3D printers allows three-dimensional structures to be generated without need of professional skills or special manufacturing facilities. Typically, designers for three-dimensional structures use three-dimensional CAD (Computer Aided Design) to perform designing works on computers and create three-dimensional model data directed to 3D printers, for example.

Conventionally, various design aiding techniques for CAD users have been proposed. Patent Document 1 discloses a design aid apparatus designed to enlighten the CAD users about cost consciousness.

### Citation List

### Patent Literature

PTL 1: Japanese Patent Application Laid-Open No. 2018-147233

### Summary of Invention

### Technical Problem

Different performances and/or functionalities may be required for the three-dimensional structures depending on their applications, for example. Specifically, some mechanical performances may be required for the three-dimensional structures. In this case, the designers would design the three-dimensional structures to achieve the mechanical performances required for the three-dimensional structures, for example, such that mechanical properties such as a density, a hardness, an elasticity, a response when an external force is applied satisfy criteria.

However, initially designed versions of the three-dimensional structures may rarely exhibit the performances and/or functionalities expected by the designers. Accordingly, in fact, an approach to iterate trial design of a three-dimensional structure and evaluation of its performances and/or functionalities is adopted. This approach may require a vast amount of time due to an increasing number of trials depending on the performances and/or functionalities required for the three-dimensional structure. Also, since it is difficult for the designers without minimum knowledge to even apply the approach, there is a need of facilitating introduction in designing three-dimensional structures.

Thus, the present disclosure is directed to aiding in designing a three-dimensional structure.

### Solution to Problem

A program according to one aspect of the present disclosure relates to a program executed by a computer including a processor, the program causing the processor to perform: obtaining specification data indicative of a specification required for at least one of a functionality and a performance of a to-be-designed three-dimensional structure; and determining a candidate structure based on the required specification from a database, wherein a parameter describing a physical property of respective candidate structures that differ from each other in terms of at least one of a material and a structure is registered in the database.

### Advantageous Effects of Invention

According to the present disclosure, designing a three-dimensional structure can be aided.

### Brief Description of Drawings

FIG. 1 is a block diagram illustrating an exemplary design aid system according to an embodiment;
FIG. 2 is a block diagram illustrating an exemplary hardware arrangement of a design aid server in FIG. 1;
FIG. 3 is a block diagram illustrating an exemplary arrangement of the design aid server 100 in FIG. 1;
FIG. 4 is a diagram illustrating an exemplary data structure of a candidate structure DB 121 in FIG. 3;
FIG. 5 is a diagram illustrating a to-be-designed three-dimensional structure and respective portions of the three-dimensional structure;
FIGS. 6A and 6B are diagrams illustrating one exemplary method for configuring a mesh in a structure;
FIGS. 7A and 7B are diagrams illustrating another exemplary method for configuring a mesh in a structure;
FIG. 8 is a diagram illustrating one exemplary structure of a candidate structure registered in a candidate structure DB in FIG. 3;
FIG. 9 is a diagram illustrating another exemplary structure of a candidate structure registered in the candidate structure DB in FIG. 3;
FIG. 10 is a flowchart illustrating an exemplary operation of the design aid server 100 in FIG. 3;
FIG. 11 is a block diagram illustrating an exemplary arrangement of a terminal in FIG. 1;
FIG. 12 is a flowchart illustrating an exemplary operation of a terminal 200;
FIGS. 13A to 13D are diagrams illustrating exemplary screen transition in user's designing a structure;
FIG. 14 is a diagram illustrating exemplary historical operation data accumulated in a design aid system according to exemplary variation 2;
FIG. 15 is a diagram illustrating an exemplary screen in user's designing a structure;
FIG. 16 is a diagram illustrating an exemplary screen in user's designing a structure;
FIG. 17 is a diagram illustrating a phase of user's pointing out a candidate structure;
FIG. 18 is a diagram illustrating a phase of user's pointing out a candidate structure;
FIGS. 19A and 19B are diagrams illustrating another example of configuring a mesh in a structure; and
FIG. 20 is a diagram illustrating one exemplary robotic hand.

### Description of Embodiments

Embodiments will be described in detail below with reference to the drawings. Note that the same or similar reference symbols are attached to the same or similar elements as or to described elements, and duplicate descriptions are basically omitted.

### (Embodiments)

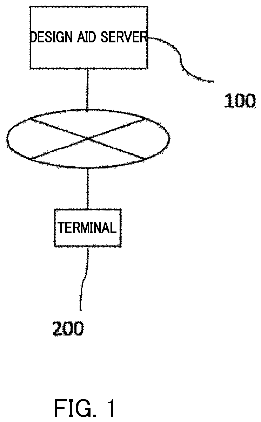

As illustrated in FIG. 1, a design aid system according to an embodiment includes a design aid server 100 (one exemplary "design aid apparatus") and a terminal 200. The design aid server 100 is connected to the terminal 200 via a network and can exchange various data each other.

The design aid server 100 may include one or more server computers. The terminal 200 may be a computer such as a PC (Personal Computer), a tablet terminal or a smartphone, for example.

The terminal 200 transmits various data to the design aid server 100 via the network in response to an input from a user as a designer of a three-dimensional structure. In response to reception of data from the terminal 200, the design aid server 100 determines a candidate structure that meets a specification requested by a user for at least a portion of the three-dimensional structure being designed by the user and presents the determined candidate structure to the user, or presents to a user a simulation result on a candidate structure selected by the user.

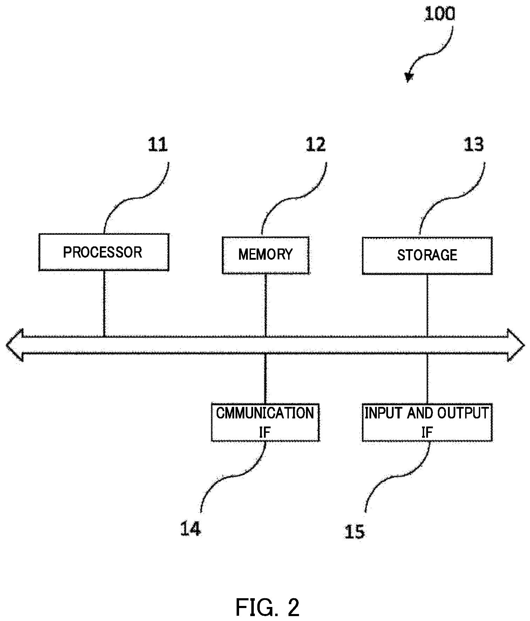

FIG. 2 illustrates one exemplary hardware arrangement of the design aid server 100 that constitutes the design aid system according to the present embodiment. The design aid server 100 includes a processor 11, a memory 12, a storage 13, a communication IF (Interface) and an input and output IF 15. Note that the terminal 200 may include the same hardware arrangement.

The processor 11 is a hardware item for executing an instruction set written in a program and is composed of an arithmetic device, a register, a peripheral circuit and so on. The memory 12 is a hardware item for temporarily storing a program, data processed with the program and so on, and may be a volatile memory such as a DRAM (Dynamic Random Access Memory), for example.

The storage 13 is a storage device for storing data and may be a flash memory, a HDD (Hard Disc Drive), a SSD (Solid State Drive) or the like, for example. The communication IF 14 is an interface for inputting and outputting signals for the design aid server 100 to communicate with an external device such as the terminal 200, for example.

The input and output IF 15 is an interface to an input device for receiving an input operation from a user (for example, a touch screen, a touch pad, a pointing device such as a mouse, a keyboard and so on) and an output device for presenting information to the user (for example, a display, a speaker and so on).

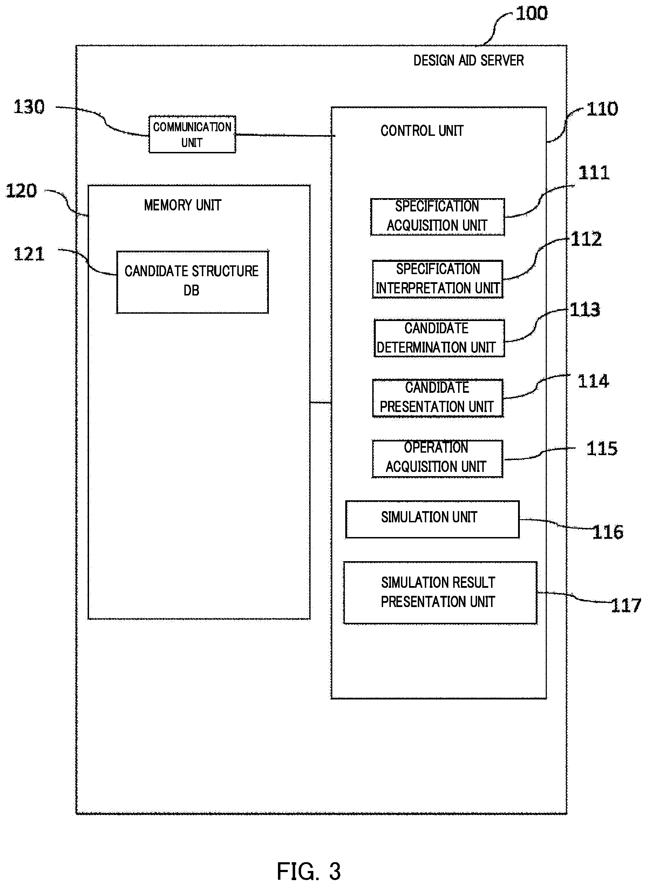

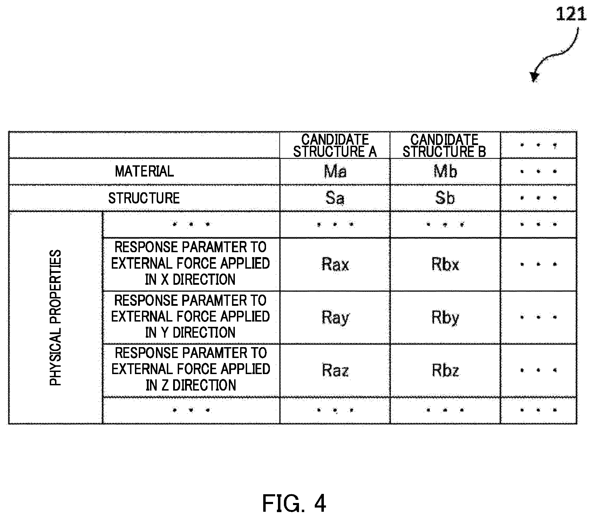

FIG. 3 illustrates a block diagram of the design aid server 100 that constitutes the design aid system according to the present embodiment. The design aid server 100 includes a control unit 110, a memory unit 120 and a communication unit 130. Respective elements in the design aid server 100 may be electrically connected to each other via a bus. FIG. 4 is a diagram illustrating an exemplary data structure of a candidate structure DB 121 in FIG. 3.

The control unit 110 loads a program stored in the memory 12 serving as the memory unit 120 and executes instructions in the program to control operations of the design aid server 100. The control unit 110 may include the above-described processor 11, for example. The control unit 110 operates in accordance with the program to serve as a specification acquisition unit 111, a specification interpretation unit 112, a candidate determination unit 113, a candidate presentation unit 114, an operation acquisition unit 115, a simulation unit 116 and a simulation result presentation unit 117.

The specification acquisition unit 111 acquires specification data indicative of a specification (specification requirement) required for a performance and/or a functionality of a to-be-designed three-dimensional structure. Specifically, the specification acquisition unit 111 acquires the specification data received by the communication unit 130 from the terminal 200. For example, if a user of the terminal 200 accesses the design aid server 100 through a browser or the like, the design aid server 100 responds to the terminal 200 with a signal for generating a screen so as to cause a display of the terminal 200 to display a screen for receiving an input of the specification data from the user. Also, a program running on the terminal 200 may serve to display the screen for receiving the input of the specification data from the user of the terminal 200 and transmit the specification data received from the user on the screen from the terminal 200 to the design aid server 100.

Here, the performance may be a numerical value or a numerical range for defining criteria imposed to one or more physical properties of a three-dimensional structure. The physical properties may include a mechanical property, a wave-motional property and a thermal property. The mechanical property may include a density, a hardness, an elasticity, a response when an external force is applied and so on, for example. The wave-motional property may include propagation characteristics of a wave motion of a three-dimensional structure and may be specifically propagation characteristics of a vibration, a sound or the like, for example. The thermal property may be propagation characteristics, emission characteristics or the like of heat of a three-dimensional structure, for example. The terminal 200 may receive an input of a parameter of the physical property that is to be possessed by the three-dimensional structure as specification data, for example, a parameter of the mechanical characteristics such as a density parameter, a hardness parameter or the like.

Also, the functionality may include provision of some user experiences such as a comfortable sitting feeling with good fitting feeling. The user experiences provided by a three-dimensional structure as the functionality may include ones associated with the mechanical property, the wave-motional property and the thermal property of the three-dimensional structure.

For example, the user experience associated with the mechanical characteristics of a three-dimensional structure may include ones associated with physical contacts (sitting down, wearing, holding or the like) with a user by the three-dimensional structure. For example, the user experience may include "a comfortable sitting feeling with good fitting feeling" on a seat or the like, and the user experience of the seat may be implemented with shapes of respective members composing the seat, deformable amounts of the respective members, hardness of the respective members or the like.

The user experience associated with the wave-motional property of a three-dimensional structure may include ones associated with safety, stability, user comfortability or the like caused by installation of a three-dimensional structure. In an example of a cushioning material as the three-dimensional structure installed in an indoor space or a mobile object such as a vehicle, the user experience may include "a performance of blocking a vibration" or the like of the cushioning material. The user experience for the cushioning material may be implemented by designing the three-dimensional structure to achieve the performance of blocking a certain frequency of a sound or vibration. Also, the user experience for the cushioning material may be implemented by designing the three-dimensional structure to achieve the performance of blocking a sound or vibration in a certain direction.

The user experience associated with the thermal property of a three-dimensional structure may include ones associated with a performance and/or an operational stability of a product having the three-dimensional structure. In an example of a microchip housing as the three-dimensional structure, the user experience may include "the performance of heat dissipation" or the like of the housing. The user experience for the housing may be implemented by designing the three-dimensional structure to manage uneven thermal conduction characteristics due to its structure.

The functionality may be defined as a subjective score subjectively evaluated by an evaluator for the user experience. For example, the subjective score may be a result from an evaluation evaluated on one-dimensional evaluation axis on the user experience for use of a structure such as an equipment, a facility or a machine. For example, the one-dimensional evaluation axis may include a discrete numerical evaluation by an evaluator. For example, in a case where a sitting feeling of a seat as the structure is evaluated, the subjective score may include an evaluation value subjectively evaluated by the evaluator based on several ranks (indicative of discrete ranks of goodness/badness of the sitting feeling).

Note that the user experience for a structure may be divided into one or more items, and the functionality of the structure may be defined based on respective evaluation values of the items of the user experience. For example, in a case where the structure is a predetermined product, the subjective scores for respective representations for use in subjectively evaluating the product may be included as the functionality of the structure. For example, when a seat as the product mounted to a transport vehicle is evaluated, the functionality of the structure may be defined using the multiple subjective scores of the user experience, for example, (i) items associated with functionalities provided by the product (for example, the functionality for user to be seated, if the product is the seat) such as items of "sitting feeling", "fitting feeling" and "elasticity feeling" and (ii) items associated with brand images directed to a customer segment for the product such as items of "sense of luxury" and "sports car-like feeling" may be used to define the functionality of the structure.

Also, the subjective score may be a result from an evaluation evaluated on multi-dimensional evaluation axes instead of the one-dimensional evaluation axis. For example, when the user experience is evaluated in a matrix form on several axes, a coordinate value in the matrix may be used as the subjective score.

Also, the functionality is not limited to parameters such as the subjective score and may allow for verbal representations such as soft, hard, light or with massive feeling. In other words, the user of the terminal 200 can indicate a verbal representation such as "soft" or "light and hard" for a predetermined portion of a three-dimensional structure without indicating a numerical value (a parameter of a density, for example).

Alternatively, a user can define the functionality by means of an intuitive input value based on a haptic feedback from a tactile sensor or the like. For example, a response desired to a user at pressing a user's physical portion (a body, a hand or the like) onto a structure can be defined as a functionality required for the structure based on a detection result of the tactile sensor.

In addition, a specification requirement may include an indication of a material (raw material). The material may include a metal material, a resin or the like. The candidate determination unit 113 as described below can use a material specified by the specification requirement (for example, a metal material such as an iron, an aluminum or a magnesium alloy, or a thermoplastic resin such as a polypropylene) to filter candidate structures.

The design aid server 100 may allow a user of the terminal 200 to specify the specification requirement for the whole three-dimensional structure or for portions thereof. Also, the specification requirement may include respective responses required for (a whole or a portion of) a three-dimensional structure when it is subjected to external forces from different directions.

Specifically, it is assumed that a user of the terminal 200 designs a three-dimensional structure modeled on a human arm. It is supposed that a 3D model modeled on the human arm is stored in advance in the design aid server 100 as a three-dimensional structure.

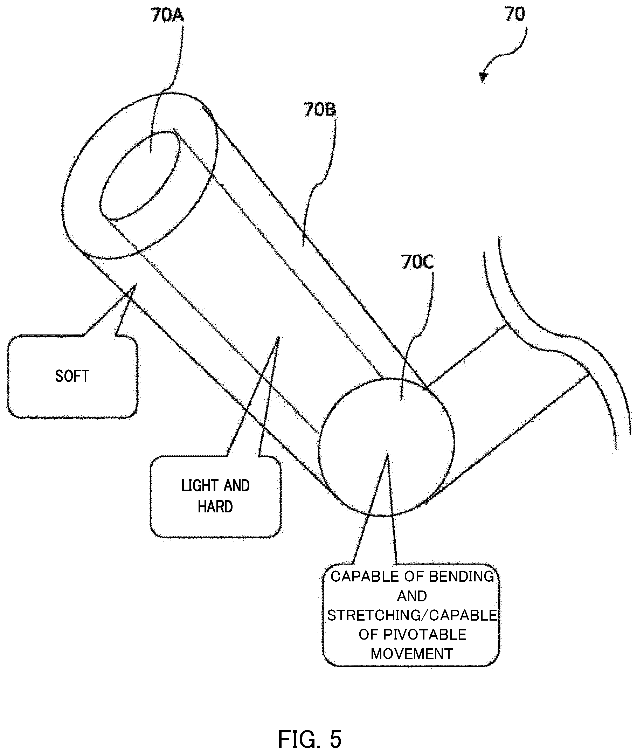

Here, as illustrated in FIG. 5, the design aid server 100 causes a 3D model 70 to be displayed on a display of the terminal 200. In the example of FIG. 5, a portion between a shoulder joint and an elbow joint and a portion between the elbow joint and a wrist are illustrated as a 3D model modeled on an arm. The 3D model 70 is composed of multiple portions (multiple objects) and specifically includes a first portion 70A corresponding to a bone in the am, a second portion 70B corresponding to a muscle in the arm and a third portion 70C corresponding to the elbow joint.

As illustrated in FIG. 5, the terminal 200 may receive individual specification requirements for the different portions from a user of the terminal 200, such as "light and hard" for the portion corresponding to the bone (the first portion 70A), "soft" for the portion corresponding to the muscle (the second portion 70B) and "capable of bending and stretching / capable of pivotable movement" for the portion corresponding to the joint (the third portion 70C).

Also, the terminal 200 may configure a mesh for a to-be-designed three-dimensional structure and receive from a user an indication of the specification requirements for respective portions defined by the mesh. The term "configure a mesh / configuring a mesh" herein may refer to division of the to-be-designed three-dimensional structure into arbitrary three-dimensional shapes. As one method of configuring a mesh, the mesh may be configured based on a predetermined shape regardless of the shape of the to-be-designed three-dimensional structure. For example, the mesh may be configured for the to-be-designed three-dimensional model to be divided in unit of a predetermined volume (in unit of voxel). Here, the number to divide a three-dimensional structure with a mesh (number of partitions) may be defined beforehand, and the mesh may be configured to divide the three-dimensional structure in unit of a predetermined number of partitions. The terminal 200 may receive from a user an indication for the mesh configuration method for the structure.

Also, if a 3D model for the to-be-designed three-dimensional structure is formed of multiple portions (the first portion 70A, the second portion 70B, the third portion 70C and so on) as illustrated in FIG. 5, the design aid server 100 may configure any coordinate system for the respective portions (for example, a three-dimensional coordinate system may be configurable), and the meshes may be configured for the respective portions based on the respective configured coordinate systems. In order to configure the meshes for the respective portions of a structure, for example, an axis may be configured in the normal direction with respect to the surface of the structure from an arbitrary point on the surface as a reference and then several axes may be configured along the surface of the structure, and meshes may be configured for the respective axes.

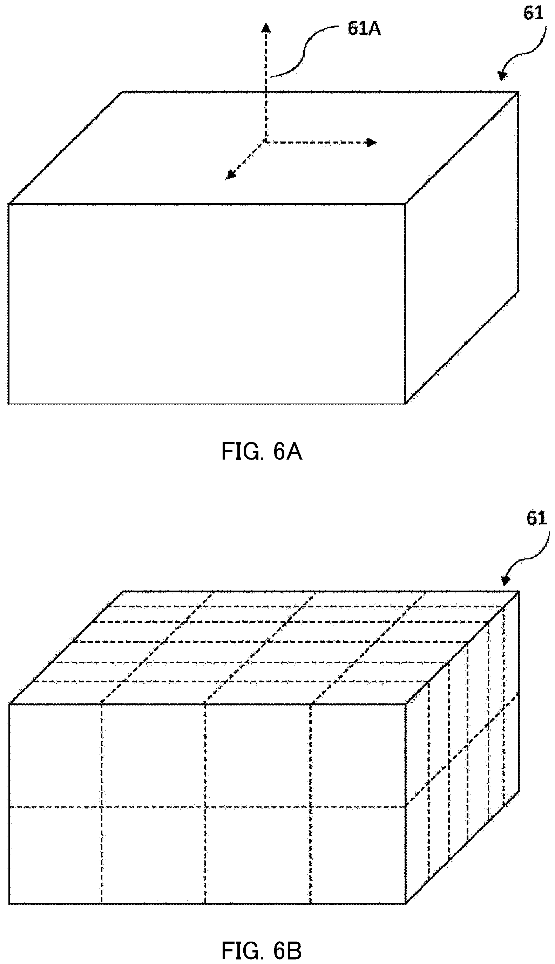

FIG. 6 illustrates one exemplary method of configuring a mesh in a structure. In FIG. 6, an exemplary cuboid is illustrated as a structure 61. FIG. 6A illustrates that a coordinate system 61A being configured on a surface of the structure. In FIG. 6A, an axis is configured in the normal direction with respect to the surface, and two axes are configured on the surface. By configuring coordinate systems for other surfaces, a mesh can be configured for the structure 61 as illustrated in FIG. 6B.

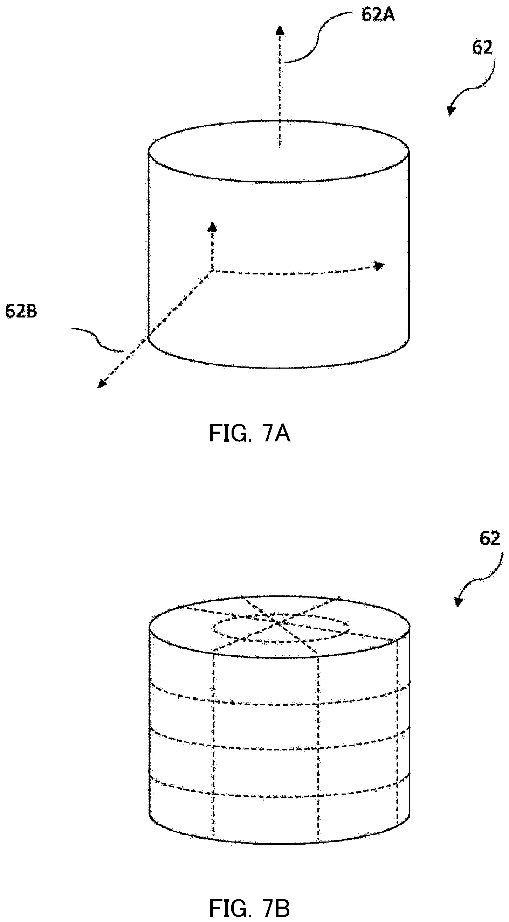

FIG. 7 illustrates another example of configuring a mesh in a structure. In FIG. 7, an exemplary structure (cylinder) having a curved surface is illustrated as a structure 62. FIG. 7A illustrates an example of configuring coordinate systems 62A and 62B. As illustrated in FIG. 7A, the coordinate system 62B including an axis in the normal direction with respect to the curved surface is configured on the curved surface of the structure 62. Also, a coordinate system including an axis 62A in the normal direction with respect to a surface different from the curved surface (a circular surface) is configured on the surface. Based on a point where the axis 62A is configured in the normal direction, the coordinate system is composed of the axis 62A as well as the distance and direction from the point on the circular surface. As illustrated in FIG. 7B, a mesh can be configured for the structure 62 based on these configurations of the coordinate system.

Note that as a result of configuring a mesh for the structure 62, a portion near the center of the cylinder in portions divided by the mesh has a shape of a triangle pole, and a peripheral portion of the cylinder has a shape of a cube in the example of FIG. 7. Besides, as one method of configuring a mesh in a structure, a mesh may be configured to cause the respective portions divided by the mesh to have a three-dimensional shape with a uniform category.

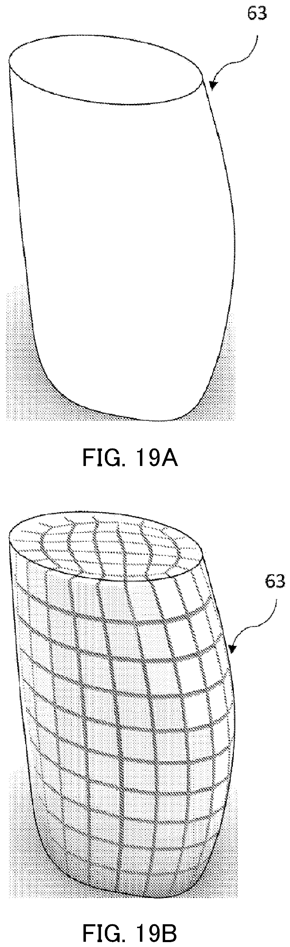

FIG. 19 is a diagram illustrating that a mesh is configured for a structure 63 to cause a three-dimensional shape of respective portions divided by the mesh to have a uniform category. In FIG. 19, an exemplary structure having top and bottom surfaces with an almost ellipse shape and a curved side surface having a sectional area enlarging from the top and bottom surfaces to the center is illustrated.

In the example of FIG. 19, the mesh is configured in the structure 63 to cause the three-dimensional shape of the respective portions divided by the mesh to be cubes. As a result, load on structural analysis can be reduced compared to the case where three-dimensional shapes of several categories (for example, a triangle pole and a cube) are included in the portions divided by the mesh.

Furthermore, the design aid server 100 may allow a user of the terminal 200 to specify what anisotropy is to be included in a three-dimensional structure. The anisotropy can be represented through the relationship between load and displacement in the three-dimensional structure. Specifically, the anisotropy may be defined by a degree of freedom of the load on the three-dimensional structure (which is equal to a degree of freedom of the displacement of the three-dimensional structure relative to the load) and a function indicative of the relationship between the load and the displacement. Note that the degree of freedom represents the number of variables.

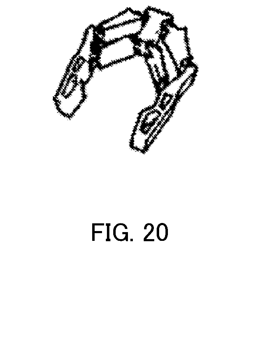

According to the three-dimensional structure having the anisotropy, structures described below can be constructed as examples:
1) compliant model (for example, a model of a robotic hand illustrated in FIG. 20); and
2) a beam structure having different bending amounts depending on directions of applied load in the case of a same amount of load being applied.

The exemplary model of a robotic hand of the above 1) is described below. If this model of a robotic hand is conceptualized as a collection of multiple beam structures and coupling portions for coupling them, upon focusing on the coupling portions, the coupling portions can be bent in their thin direction, but the degree of freedom in bending and rotating is constrained with respect to the other directions. In other words, in the model of a robotic hand illustrated in FIG. 20, it is intended that the coupling portions can be displaced in accordance with the amount of load applied to bend the coupling portion in their thin direction while the displacement by both bending and twisting is prevented from occurring for load in the other directions.

The exemplary beam structure of the above 2) is described below. For example, an ordinary beam structure having a circular section is bent by the same bending amount for load from any direction vertical to the axis direction. In the ordinary beam structure having a circular section with the anisotropy, however, even if the same amount of load is applied to the ordinary beam structure, the bending amount can be made different between a case of the load being applied in a certain direction and a case of the load being applied in a direction different from the certain direction. Similarly, for example, in a beam structure having a square section with the anisotropy, even if the same amount of load is applied, the bending amount can be made different between a case of the load being applied in the direction along one edge and a case of the load being applied in the orthogonal direction with respect to the direction.

For example, it is assumed that the design aid server 100 receives from a user a configuration of arbitrary coordinate systems for respective portions of a three-dimensional structure. The design aid server 100 may allow the user to specify a specification requirement based on the configured coordinate system. For example, it is assumed that the coordinate system composed of a plane of an outer surface corresponding to a skin and a normal line of the outer surface may be configured for the portion (the second portion 70B) corresponding to the muscle of the 3D model 70. The user of the terminal 200 can specify the specification requirement with the anisotropy to be hard (difficult to deform) to an external force applied from the normal direction of the outer surface corresponding to the skin and be soft (easy to deform) to an external force applied from the direction orthogonal to the normal direction. In other words, the design aid server 100 can allow the user of the terminal 200 to specify physical properties with the anisotropy (for example, difficult to deform in a certain direction and easy to deform in another certain direction) for the three-dimensional structure.

When the specification requirement indicative of specification data includes a functionality, for example, the specification interpretation unit 112 interprets the specification requirement and converts it into criteria imposed on one or more physical properties of a to-be-designed three-dimensional structure.

The specification interpretation unit 112 may perform the conversion in accordance with a predefined rule, for example. For example, it is assumed that the design aid server 100 has obtained the specification data including a verbal representation from the user of the terminal 200 instead of a numerical value indicative of the physical properties such as a density or a weight. For example, the design aid server 100 may receive a representation indicative of a property of the functionality such as "hard", "light" or "bendable", a representation indicative of a degree of the property such as "slightly" (bendable) or "significantly" (deformable) and combinations thereof (such as "light and hard") as the verbal representation from the user of the terminal 200. The specification interpretation unit 112 may store reference information that associates the respective verbal representations with parameters of the physical properties as a rule for interpretation of the specification requirement indicated in the specification data beforehand. For example, the respective representations such as "hard" and "light" may be associated with numerical values indicative of the physical properties (such as the density or the weight). In this manner, the specification interpretation unit 112 can interpret the specification requirement and convert it into the criteria imposed on the one or more physical properties of the to-be-designed three-dimensional structure.

Also, the design aid server 100 may store the reference information that associates the respective verbal representations with the parameters of the physical properties depending on categories of the to-be-designed three-dimensional structure. In other words, even if the verbal representations are almost the same (for example, "hard" or "light"), the parameters of the required physical properties may be different depending on whether the to-be-designed three-dimensional structure is used as furniture, whether it is used as a seat for a vehicle, or whether it is used as a dummy that imitates a movable physical range of a living organism. By obtaining information regarding the category of the to-be-designed three-dimensional structure (for example, by receiving an operation to specify the category of the to-be-designed three-dimensional structure), the specification interpretation unit 112 of the design aid server 100 may select the above reference information to interpret the specification requirement based on the reference information.

Also, the specification interpretation unit 112 may use a trained model to convert the specification requirement into the physical properties of the to-be-designed three-dimensional structure.

For example, as described in detail below, the design aid server 100 presents candidate structures for specification requirements specified by a user. The design aid server 100 can retain information for structures specified by the user to store the to-be-designed three-dimensional structure, specification requirements specified by the user and the information of the structures specified by the user (namely, a numerical value indicative of the physical properties of a structure) in association. By training a model based on these information pieces, the trained model for outputting the physical properties of the to-be-designed three-dimensional structure for specification requirements specified by the user can be generated. Further details are described below.

Note that the specification interpretation unit 112 may be omitted depending on contents of the specification data. For example, the design aid server 100 may use the to-be-designed three-dimensional structure, specification requirements specified by the user and the trained model to present a candidate three-dimensional structure to the user. In other words, the specification requirement may not be necessarily converted into the physical properties of the to-be-designed three-dimensional structure.

The candidate determination unit 113 determines a candidate structure satisfying the specification requirements from a candidate structure DB (database) 121. For example, the candidate determination unit 113 may determine the candidate structure satisfying the specification requirements with reference to the candidate structure DB 121 based on a result of conversion of the specification requirements indicated in the specification data received from the user of the terminal 200 into the parameters indicative of the physical properties of the to-be-designed three-dimensional structure at the specification interpretation unit 112. As illustrated in FIG. 4, parameters that describe the respective physical properties of several different candidate structures in terms of materials and/or constructions are registered in the candidate structure DB 121.

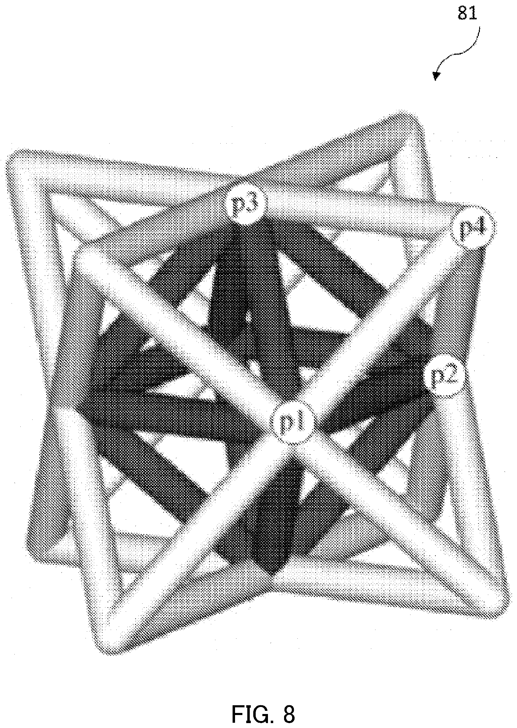

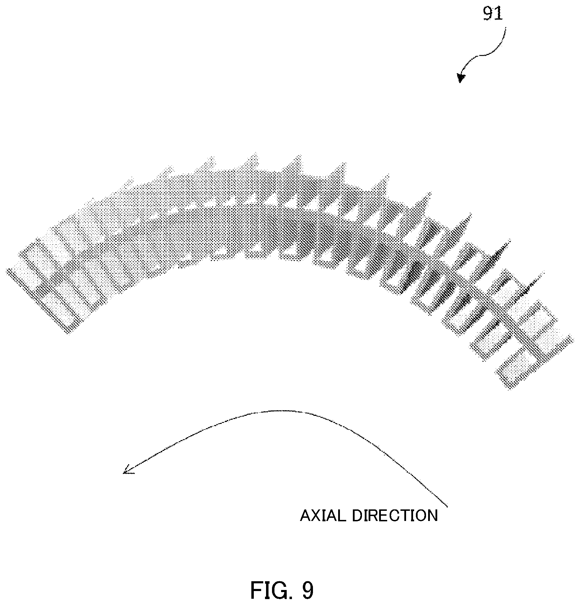

At least one of the candidate structures registered in the database may be of the anisotropy. Specifically, these candidate structures may include a higher rigidity for load from a certain direction and a lower rigidity (flexibility) for load from other directions. In other words, the candidate structures may include both the rigidity and the flexibility for the load thereto. The candidate structures may be composed of a lattice structure 81 as illustrated in FIG. 8 or a compliant mechanism 91 as illustrated in FIG. 9. By using the lattice structure for the structure, the weight of the structure can be decreased, and a predetermined amount of deformation for the load from a certain direction may be acceptable while keeping the rigidity for the load from a different direction. In other words, the structure with the lattice structure can have the anisotropy.

Also, in order to achieve a motion (movement) required by the user for the structure, the anisotropy, where the structure is flexible on deformation satisfying the motion required for the structure and has a high rigidity on deformation causing the motion not-required for the structure, can be fulfilled by using the compliant mechanism for the structure. For example, by using the compliant mechanism 91 as illustrated in FIG. 9, the structure having the anisotropy can be achieved, and a feeling of vitality can be represented through the motion of the structure with the anisotropy. For example, in the example of FIG. 9, the movement like bones of a living organism scrolling on the ground can be represented. In the example of FIG. 9, a predetermined amount of deformation becomes possible by having a higher rigidity for the load from a certain direction (in the example of FIG. 9, having the rigidity for the load from the axial direction) and a lower rigidity for the load from another direction (the deformation is possible for the load from the direction vertical to the axial direction, and the whole shape of the structure may be like a circular arc or a straight line with reference to the axial direction). As described above, inclusion of the ones having lattice structure or the compliant mechanism in the candidate structures can make the several candidate structures include the ones having the anisotropy.

Parameters that describe responses of the respective candidate structures to an applied external force may be registered in the candidate structure DB 121. Particularly, these parameters may be registered for respective different directions of applied external forces, as illustrated in FIG. 4.

In this manner, by registering the parameters that describe responses to the applied external forces for the respective directions, the physical properties can be properly described and handled even for the candidate structures having the anisotropy. The design aid server 100 can determine a candidate structure having the anisotropy, for example, where it may be hard (difficult to deform) for an external force applied from a certain direction and be soft (easy to deform) for an external force applied from the direction orthogonal to the certain direction, as satisfying the specification requirements for a portion corresponding to a muscle of the three-dimensional structure modeled on the human arm as described above and present the determined candidate structure to the user of the terminal 200.

On the other hand, since a structure having isotropy has the physical properties such as hard/soft regardless of the applied direction of an external force, for example, the specification requirements "light and hard" for the portion (the first portion 70A) corresponding to a bone of a three-dimensional structure modeled on the human arm as described above is satisfied while the specification requirements for the portion (the second portion 70B) corresponding to the muscle may not be sufficiently satisfied. For example, even if the portion (the second portion 70B) corresponding to the muscle is formed of a candidate structure having the isotropy, it could be that a natural elastic force to be inherently possessed by biotissues cannot be felt, because they are too soft for an external force from the normal direction of an outer surface corresponding to a skin. For the three-dimensional structure modeled on human arm, deformation other than motions for bending and extending a joint at a joint portion (the third portion 70C) is undesirable, and thus the anisotropy is desired for the joint portion to be flexible only for the deformation causing the motion of the joint and to be highly rigid for the other deformation. In this manner, it is possible to meet various specification requirements properly by registering both the candidate structures having the isotropy and the candidate structures having the anisotropy in the candidate structure DB 121.

The candidate determination unit 113 may determine the candidate structures that satisfy all of the above-described one or more criteria included in the specification requirements and/or converted from the specification requirements by using the parameters registered in the candidate structure DB 121 as clues, for example.

For respective portions of a to-be-designed three-dimensional structure, the candidate determination unit 113 assigns a functionality and a performance required for respective portions or respective areas defined by a mesh configured for the respective portions (for example, in unit of voxel in cases of the mesh being configured with voxels) based on the specification requirements (namely, the functionality and performance required for the respective portions of the three-dimensional structure). The candidate determination unit 113 estimates the candidate structures satisfying the functionality and performance assigned for the respective areas to determine the candidate structures for the respective areas.

For example, it is assumed that the deformation amount for allowing a certain portion of a three-dimensional structure to be deformed in a predetermined direction is input as the specification requirement. The allowed deformation amount of that portion can be calculated based on the deformation amount for allowing respective units defined by the mesh configured for the portion to be deformed in the certain direction. In other words, the functionality and performance required for the respective units defined by the mesh configured for the portion can be determined such that the deformation amount for allowing the portion to be deformed in the predetermined direction can satisfy the specification requirement. In this fashion, the candidate determination unit 113 can determine the candidate structures for the respective units defined by the mesh.

The candidate determination unit 113 assigns the candidate structures to satisfy the specification requirements for couplings among respective portions of the structures based on the candidate structures determined for the respective portions of the to-be-designed three-dimensional structure. For example, in a case where the candidate determination unit 113 determines the candidate structures for the respective portions based on the specification requirements for the respective portions, the candidate determination unit 113 may perform simulation to evaluate the functionality and performance under the case where the respective portions on these candidate structures are coupled. If the evaluation result does not satisfy the specification requirements, the candidate determination unit 113 determines the couplings of the respective portions as being poor and repeats processes to estimate the candidate structures for the respective portions of the three-dimensional structure or respective areas defined by mesh configured for the respective portions.

The candidate presentation unit 114 presents information regarding one or more candidate structures determined by the candidate determination unit 113 to the user. Specifically, the candidate presentation unit 114 causes the communication unit 130 to transmit the information regarding the candidate structures to the terminal 200. The information regarding the candidate structures may include image data, video data or the like that represents materials constituting the candidate structures, structures thereof and/or the physical properties thereof.

The operation acquisition unit 115 obtains operation data for selecting any of the candidate structures presented by the candidate presentation unit 114. Specifically, the operation acquisition unit 115 obtains the operation data received at the communication unit 130 from the terminal 200. Note that the operation acquisition unit 115 may obtain the operation data for selecting other candidate structures after presentation of a simulation result as described below.

In response to acquisition of the operation data for selecting any of the candidate structures at the operation acquisition unit 115, the simulation unit 116 simulates at least one of the functionality and performance achieved by the three-dimensional structure when the three-dimensional structure is composed of the candidate structure and obtains a simulation result.

The simulation result may be video data that represents a behavior of the whole or a portion of the three-dimensional structure when an external force is applied, for example. Also, the simulation result may include one or more physical properties, for example, a functional evaluation based on the mechanical functionality that is expected for the whole or a portion of the three-dimensional structure to achieve when the three-dimensional structure is composed of the candidate structure,.

For example, as illustrated in FIG. 5, when the three-dimensional structure representing an arm is designed, the simulation unit 116 may obtain a simulation result, based on a state where deformation is possible at applying the load to the arm extending direction and a state where the deformation is possible at applying the load to the arm bending direction as the behavior of the whole or a portion of the three-dimensional structure, by switching between these load applied directions. In this fashion, according to the example of FIG. 5, the simulation unit 116 can obtain video data where the deformation is conducted to bend or extend the arm at the maximum.

Note that if the specification data is specified for respective portions of the three-dimensional structure instead of the whole structure, the simulation unit 116 performs simulation for cases where a portion is composed of one selected by operation data among the candidate structures for the portion presented based on the specification data for the respective portions.

Also, the simulation unit 116 may perform the simulation whenever the operation acquisition unit 115 obtains the operation data for selecting the candidate structure. For example, in a case where the simulation result on the candidate structure initially selected by the user is not acceptable to the user or in order to confirm the simulation result on other candidate structures, the user may newly select a candidate structure different from the initially selected candidate structure among the presented candidate structures. In this case, the simulation unit 116 will perform the simulation on the newly selected candidate structure to generate a new simulation result.

The simulation result presentation unit 117 presents the simulation result to the user. In particular, the simulation result presentation unit 117 causes the communication unit 130 to transmit the simulation result to the terminal 200. Note that he simulation result presentation unit 117 may present the simulation result to the user whenever the simulation unit 116 performs the simulation.

The memory unit 120 may include the memory 12 and/or the storage 13 as described above, for example, and store data and programs for use in the design aid server 100. In a situation, the memory unit 120 may store the above-described candidate structures DB 121. Note that the candidate structure DB 121 may be unnecessarily constructed on the design aid server 100 and may be constructed on an external apparatus separated from the design aid server 100, for example, a database server.

The communication unit 130 is a communication module that performs various signal processes such as modulation and demodulation processes for the design aid server 100 to communicate with the terminal 200 or other external apparatuses in a wired or wireless manner. The communication unit 130 provides a reception signal to the control unit 110 and receives a transmission signal from the control unit 110. The communication unit 130 includes the above-described communication IF 14.

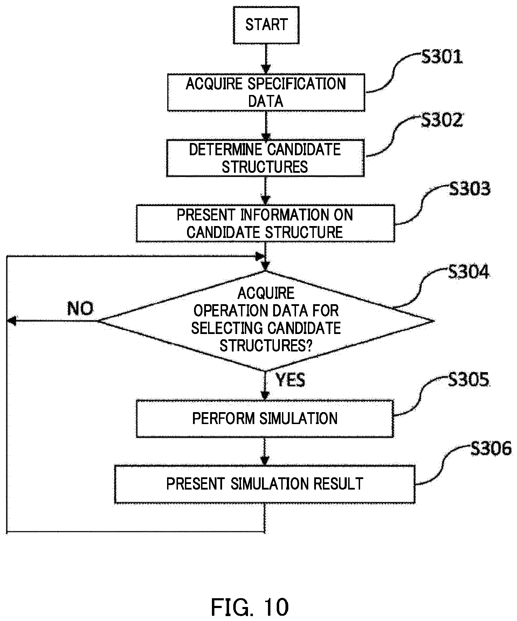

An exemplary operation of the design aid server 100 is described below with reference to FIG. 10.

At first, the specification acquisition unit 111 obtains specification data indicative of a specification requirement for a functionality and/or a performance of a to-be-designed three-dimensional structure (step S301).

The candidate determination unit 113 determines candidate structures in the candidate structure DB 121 (step S302) that satisfy the specification requirement indicated by the specification data obtained at step S301 .

Note that a step for the specification interpretation unit 112 to interpret the specification requirements indicated by the specification data obtained at step S301 and to convert them into criteria imposed on one or more physical properties of the to-be-designed three-dimensional structure may be added between steps S301 and S302.

The candidate presentation unit 114 presents information regarding one or more candidate structures determined at step S302 to the user (step S303).

The operation acquisition unit 115 waits to obtain operation data for selecting any of the candidate structures presented at step S303 (step S304). When the operation acquisition unit 115 obtains the operation data, the flow proceeds to step S305.

At step S305, the simulation unit 116 simulates at least one of the functionality and performance achieved by the three-dimensional structure when the three-dimensional structure is composed of the candidate structure selected by the operation data obtained at step S304 and obtains a simulation result (step S306).

The simulation result presentation unit 117 presents the simulation result obtained at step S306 to the user (step S307). After step S307, the operation acquisition unit 115 waits to obtain operation data for newly selecting any of the candidate structures presented at step S303 (step S304).

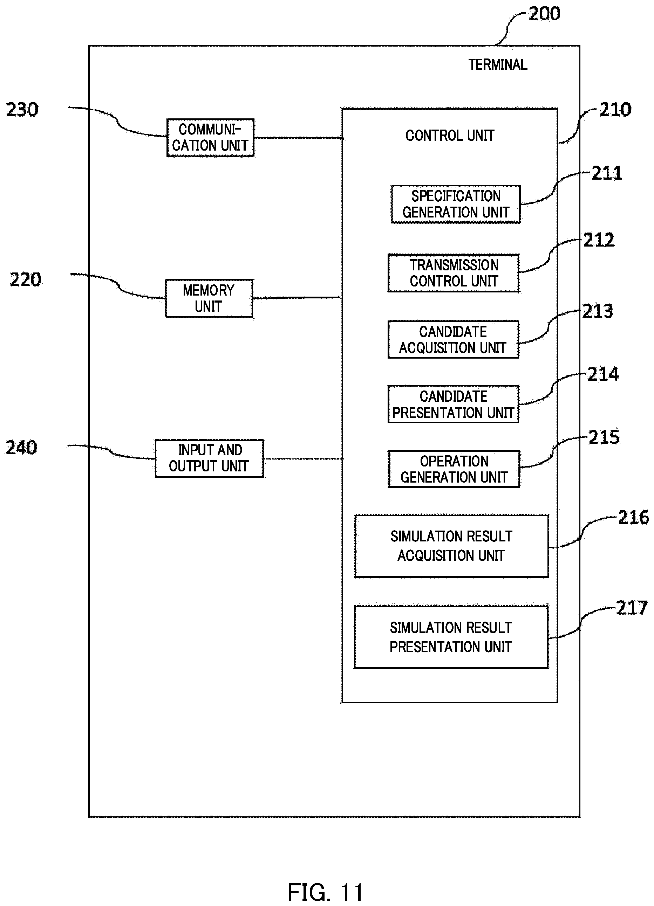

FIG. 11 illustrates a block diagram of the terminal 200 composing the design aid system according to the present embodiment. The terminal 200 includes a control unit 210, a memory unit 220, a communication unit 230 and an input and output unit 240. The respective elements in the terminal 200 may be electrically connected to each other via a bus.

The control unit 210 loads programs stored in a memory as the memory unit 220 and executes instructions in the programs to control operations of the terminal 200. The control unit 210 may include a processor, for example. The control unit 210 operates in accordance with the programs to serve as a specification generation unit 211, a transmission control unit 212, a candidate acquisition unit 213, a candidate presentation unit 214, an operation generation unit 215, a simulation result acquisition unit 216 and a simulation result presentation unit 217.

The specification generation unit 211 generates the above-described specification data based on input from a user. Similarly, the operation generation unit 215 generates the above-described operation data based on an input from the user. The input from the user is received at an input device in the input and output unit 240 and is delivered to the control unit 210 via an input and output IF.

The transmission control unit 212 causes the communication unit 230 to transmit the specification data generated by the specification generation unit 211 to the design aid server 100. Also, the transmission control unit 212 causes the communication unit 230 to transmit the operation data generated by the operation generation unit 215 to the design aid server 100.

The candidate acquisition unit 213 obtains information regarding candidate structures received at the communication unit 230 from the design aid server 100. Then, the candidate presentation unit 214 presents the information regarding the candidate structures obtained by the candidate acquisition unit 213 to the user. Specifically, the candidate presentation unit 214 may cause an output device in the input and output unit 240 to output the information regarding the candidate structures.

The simulation result acquisition unit 216 obtains a simulation result received at the communication unit 230 from the design aid server 100. Then, the simulation result presentation unit 217 presents the simulation result obtained by the simulation result acquisition unit 216 to the user. Specifically, the simulation result presentation unit 217 may cause the output device in the input and output unit 240 to output the simulation result.

The memory unit 220 may include a memory and/or a storage, for example, and store data and programs for use in the terminal 200.

The communication unit 230 is a communication module that performs various signal processes such as modulation and demodulation processes to communicate with the design aid server 100 or other external apparatuses in a wired or wireless manner. The communication unit 230 provides a reception signal to the control unit 210 and receives a transmission signal from the control unit 210. The communication unit 230 includes a communication IF.

The input and output unit 240 includes an input device and an output device. The input device may be a keyboard, a pointing device or the like, for example. The output device may be a display, for example.

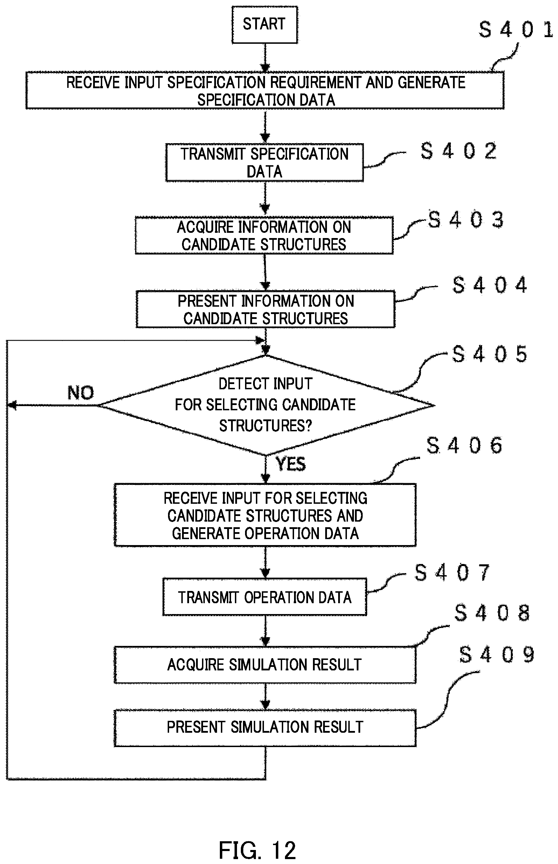

An exemplary operation of the terminal 200 is described below with reference to FIG. 12.

First, the specification generation unit 211 receives an input of a specification requirement for a functionality and/or a performance of a to-be-designed three-dimensional structure from a user and generates specification data indicative of the specification requirement (step S401).

The transmission control unit 212 causes the communication unit 230 to transmit the specification data generated at step S401 to the design aid server 100 (step S402).

After step S402, the candidate acquisition unit 213 obtains information regarding candidate structures received at the communication unit 230 from the design aid server 100 (step S403). The candidate structures are determined by the design aid server 100 from the candidate structure DB (database) 121 as satisfying the specification requirement indicative of the specification data transmitted at step S402.

The candidate presentation unit 214 presents the information regarding the candidate structures obtained at step S403 to the user (step S404).

The operation generation unit 215 waits for the input device in the input and output unit 240 to detect an input for selecting any of the candidate structures presented at step S404 (step S405). Upon detecting the input at the input device, the flow proceeds to step S406.

At step S406, the operation generation unit 215 receives the input for selecting any of the candidate structures detected at step S405 from the user and generates operation data indicating that the candidate structure(s) has(have) been selected.

The transmission control unit 212 causes the communication unit 230 to transmit the operation data generated at step S406 to the design aid server 100 (step S407).

After step S407, the simulation result acquisition unit 216 obtains a simulation result received at the communication unit 230 from the design aid server 100 (step S408).

The simulation result presentation unit 217 presents the simulation result obtained by the simulation result acquisition unit 216 to the user (step S409). After step S409, the operation generation unit 215 waits for the input device in the input and output unit 240 to detect an input for newly selecting any of the candidate structures presented at step S404 (step S405).

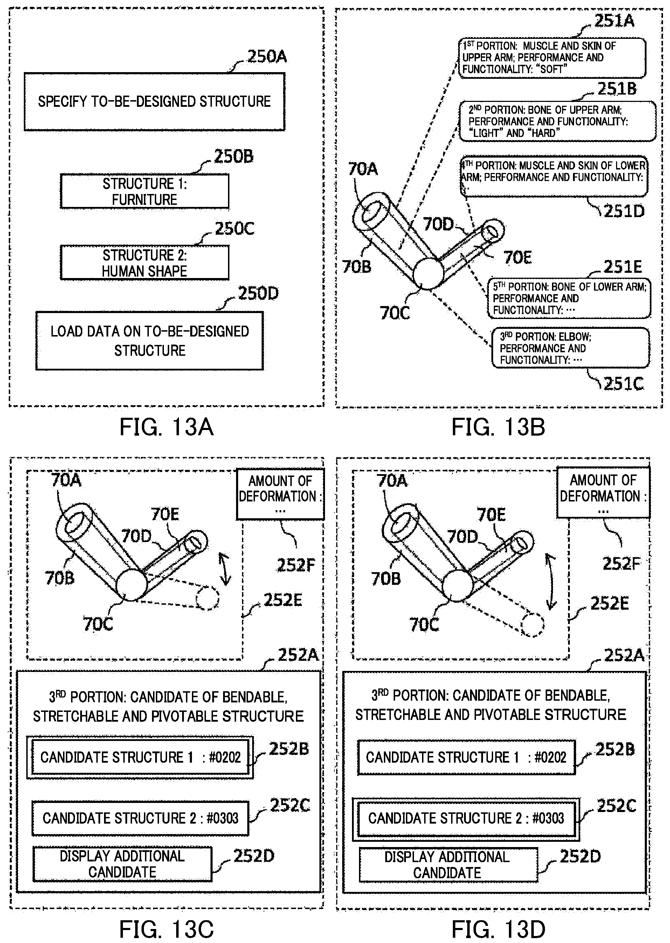

FIG. 13 is a diagram illustrating an exemplary screen transition when a user designs a structure.

Exemplary screen (A) in FIG. 13 illustrates a situation where the user specifies a to-be-designed structure. As illustrated in the exemplary screen (A), the terminal 200 displays a notification 250A, a first to-be-designed candidate 250B, a second to-be-designed candidate 250C and a loading reception region 250D on a display.

The notification 250A includes an area to cause the user of the terminal 200 to specify a to-be-designed structure.

The first to-be-designed candidate 250B corresponds to a first to-be-designed structure ("furniture" in the illustrated example), and the second to-be-designed candidate 250C corresponds to a second to-be-designed structure ("human shape" in the illustrated example).

In response to user's operation to specify the first to-be-designed candidate 250B, the terminal 200 loads data (such as a 3D model, information to divide the to-be-designed structure into respective portions, and a mesh configuration) regarding the structure corresponding to the first to-be-designed candidate 250B. Similarly, in response to user's operation to specify the second to-be-designed candidate 250C, the terminal 200 loads data regarding the structure corresponding to the second to-be-designed candidate 250C.

The loading reception region 250D is an area to receive an operation for further displaying a candidate of the to-be-designed structure on a display so that the user can specify the candidate. For example, in response to an operation for the user to specify the loading reception region 250D or a predetermined operation for allowing the user to input to the terminal 200 (for example, a flick operation on a touch screen or the like if the touch screen is mounted to the terminal 200), the terminal 200 obtains the candidates of the to-be-designed structure by querying to the design aid server 100 or the like.

In this manner, the user of the terminal 200 can specify the to-be-designed structure with a predetermined operation (for example, an operation that can be input with a pointing device) that can be received at the terminal 200.

In response to user's specification of the second to-be-designed candidate 250C in the exemplary screen (A), the terminal 200 presents a screen to aid the user to design the to-be-designed structure (an arm portion in the human shape in the illustrated example) to the user as shown in the exemplary screen (B).

The exemplary screen (B) illustrates a situation where the user specifies the specification requirements for respective portions of the to-be-designed structure.

As illustrated, the terminal 200 presents a 3D model 70 indicative of a structure corresponding to an upper arm and a lower arm as portions of the to-be-designed structure to the user. Further, the terminal 200 displays a first portion 70A, a second portion 70B, a third portion 70C, a fourth portion 70D and a fifth portion 70E as respective portions composing the 3D model 70 such that the user can identify them. The first portion 70A corresponds to a bone portion of the upper arm. The second portion 70B corresponds to a muscle and skin portion of the upper arm. The third portion 70C corresponds to an elbow portion. The fourth portion 70D corresponds to a muscle and skin portion of the lower arm. The fifth portion 70E corresponds to a bone portion of the lower arm.

The terminal 200 displays detail displaying regions (251A to 251E) for displaying contents specified by the user for the respective portions in association with the respective portions (70A to 70E) of the 3D model 70 to be displayed on a display. The terminal 200 presents to the user that the detail displaying region 251A is associated with the first portion 70A (in the illustrated example, the first portion 70A and the detail displaying region 251A are displayed in a state where they are coupled with a dotted line). Similarly, the terminal 200 displays that the detail displaying region 251B is associated with the second portion 70B, the detail displaying region 251C is associated with the third portion 70C, the detail displaying region 251D is associated with the fourth portion 70D, and the detail displaying region 251E is associated with the fifth portion 70E.

In the exemplary screen (B), the terminal 200 receives operations from the user for specifying the respective portions of the to-be-designed structure. For example, the terminal 200 receives an input of specification requirements for the functionality and/or performance of the respective portions of the to-be-designed structure by receiving an operation from the user for specifying the detail displaying regions (251A to 251E) or an operation for specifying the respective portions (70Ato 70E) of the 3D model 70,. Here, as described above, the user can specify the anisotropy as the functionality and/or performance of the to-be-designed structure.

For example, it is assumed that the user has specified the detail displaying region 251C and input the specification requirements for the functionality and/or performance for the third portion 70C. It corresponds to step S301 in FIG. 10. Here, the third portion 70C corresponds to the elbow portion, and accordingly the user specifies that the third portion 70C can bend, extend and rotate so that the third portion 70C can be deformed to enable the lower arm to extend up to a certain degree whereas the lower arm does not extend beyond the certain degree (to prevent the arm from bending too much). Also, the user can specify that the second portion 70B (the muscle portion of the upper arm) has the anisotropy to be less deformed for load in the normal direction on the skin surface. For example, the user may be enabled to specify arbitrary coordinate systems for the respective portions of the to-be-designed structure so as to allow the user to specify the anisotropy. For example, the terminal 200 may receive specifications of the coordinate systems in response to user's specification of the second portion 70B or the detail displaying unit 251B displayed on a display,. The terminal 200 receives user's input of a parameter for the anisotropy based on the coordinate systems (for example, deformation is disabled in a first axis direction of the coordinate system while deformation is enabled in a second axis direction by a certain amount).

In response to user's input of the specification requirements, the terminal 200 displays a screen for presenting candidates of the respective portions of a structure as illustrated in the exemplary screen (C).

The exemplary screen (C) illustrates a situation where candidate structures of the respective portions of the structure are presented to the user and a simulation result is presented to the user while specifications of the candidate structures are received from the user.

As illustrated in the exemplary screen (C), the terminal 200 displays candidates of the structure (candidate structures) corresponding to the specification requirements specified by the user for the to-be-designed structure on a display. The terminal 200 displays a candidate structure presentation region 252A, a first candidate structure 252B, a second candidate structure 252C, a candidate loading region 252D, a simulation result presentation region 252E and a physical property displaying region 252F on the display.

The candidate structure presentation region 252A is an area where the specification requirements for the portions of the to-be-designed structure specified by the user are informed to the user and the candidate structures are presented to the user.

The first candidate structure 252B and the second candidate structure 252C indicate candidate structures to be candidates of the structure for the portions specified by the user. It corresponds to the process of step S303. In the illustrated example, the terminal 200 presents the candidate structures specified by the user to the user by highlighting the candidate structures specified by the user (the first candidate structure 252B is specified) so that the candidate structures specified by the user can be distinguished from candidate structures that are not specified by the user. Note that it is assumed in the illustrated example that the terminal 200 classifies the to-be-designed three-dimensional structure into several parts such as an elbow joint (the third portion 70C) and a bone (the first portion 70A) at the simulation result presentation region 252E for the to-be-designed structure and receives specifications of functionalities requested by the user for all the classified parts. If the candidate structures identified based on the specification requirements are included, the terminal 200 may display the respective portions of the to-be-designed three-dimensional structure in the simulation result presentation region 252E in a manner where they are filled with the identified candidate structures. Whenever the user specifies the candidate structures (252B and 252C) in the simulation result presentation region 252E, the terminal 200 may display the respective portions of the to-be-designed three-dimensional structure in the simulation result presentation region 252E in a manner where they are filled with the specified candidate structures. The terminal 200 may not display a mesh configured for the respective portions in the simulation result presentation region 252E. As a result, the three-dimensional structure can be designed without need of user's recognition on configuration of mesh and voxels.

Besides, the terminal 200 may present to the user one or more candidate structures for any unit defined by a mesh among the portions specified by the user for the to-be-designed structure. The terminal 200 may apply the candidate structures for multiple portions of units defined by a mesh by user's specifications of the candidate structures for the units defined by the mesh. For example, the terminal 200 may apply candidate structures specified by the user for the units where the functionality or performance equivalent to those of the units defined by the mesh is required.

The candidate loading region 252D is an area where an operation to present a larger number of candidate structures to the user is received.

The simulation result presentation region 252E and the physical property displaying region 252F are areas to display a simulation result of simulation performed based on results from user's specifications of candidate structures for respective portions. It corresponds to step S306 in FIG. 10. In the exemplary screen (C), a simulation result of the 3D model 70 obtained by rotating the fourth portion 70D and the fifth portion 70E in accordance with a load is displayed as animation in the simulation result presentation region 252E as deformation of the arm that is bent around the third portion 70C (namely, a portion corresponding to an elbow of the arm). For example, in the exemplary screen (C), the terminal 200 displays an animation in which the fourth portion 70D and the fifth portion 70E are moved or deformed in ranges indicated with solid and dotted lines. The physical property displaying region 252F is an area to display parameters of physical properties of the to-be-designed structure based on the simulation result. The parameters of physical properties may include a deformation amount of the to-be-designed structure for load from respective directions, durability as to how much load the to-be-designed structure is durable for, a rigidity, a density and other parameters.

In the exemplary screen (C), the terminal displays an exemplary screen (D) in response to user's specification of the second candidate structure 252C different from the first candidate structure 252B (step S304),.

The exemplary screen (D) illustrates a situation where a new simulation result is presented to the user in response to an operation by the user to specify candidate structures. As illustrated in the exemplary screen (D), the second candidate structure 252C is highlighted compared to the other candidate structures, which indicates that the second candidate structure 252C is specified by the user.

The terminal 200 transmits information regarding the candidate structure specified by the user to the design aid server 100 in response to the specification of the second candidate structure 252C made by the user,. The terminal 200 receives a simulation result from the design aid server 100 which is simulated in response to the specification of the second candidate structure 252C made by the user (steps S305 and S306). The terminal 200 displays the simulation result in the simulation result presentation region 252E which is obtained as a result of the specification of the second candidate structure 252C made by the user. In comparison with the exemplary screen (C), it is presented to the user that the deformation of the to-be-designed structure (illustrated in the 3D model 70) in the exemplary screen (D) is different from that in the exemplary screen (C) as the simulation result.

In this manner, the user can design a structure while checking a simulation result obtained by specifying candidate structures determined by the design aid server 100 according to the specification requirements input by user. In other words, the user can specify candidate structures presented to the user with reference to the candidate structure DB 121 for respective portions of the to-be-designed structure to identify structures of the respective portions of the structure having the functionality and/or performance corresponding to the specification requirements from the user.

As described above, in the design aid system according to the present embodiment, the design aid server determines a candidate structure satisfying the specification requirement for at least one of the functionality and performance of a to-be-designed three-dimensional structure from a database in which parameters describing physical properties of respective different candidate structures in terms of at least one of a material and a structure are registered. Thus, according to the present design aid system, the user can identify the candidate structures satisfying the specification requirement more quickly without user's trial and error. Also, some of these multiple candidate structures may include the anisotropy, and the candidate structures having the anisotropy that is hard (difficult to deform) for an external force applied in a certain direction and is soft (easy to deform) for an external force applied in the direction orthogonal to the certain direction can be determined and presented to the user as satisfying the specification requirement for a portion corresponding to a muscle of a three-dimensional structure modeled on human arm.

Also, the structure having a lattice structure or a compliant mechanism can be easily produced by using a 3D printing technique for the to-be-designed structure,.

### (Variation 1)

In the above-described embodiments, the design aid system is implemented through cooperation of the design aid server 100 and the terminal 200 as a so-called client-server based system. However, the design aid system can be implemented as a standalone based system by incorporation of functionalities of the design aid server 100 into the terminal 200.

### (Variation 2)

In the above-described embodiments, if a functionality is specified as the specification requirement, the design aid system can convert it into criteria imposed on one or more physical properties of the to-be-designed three-dimensional structure, determine candidate structures satisfying the criteria, and presents them to a user. However, the candidate structures estimated as satisfying the functionality specified by the user can be presented without conducting the above conversion through machine learning with accumulated historical operation data of the user.

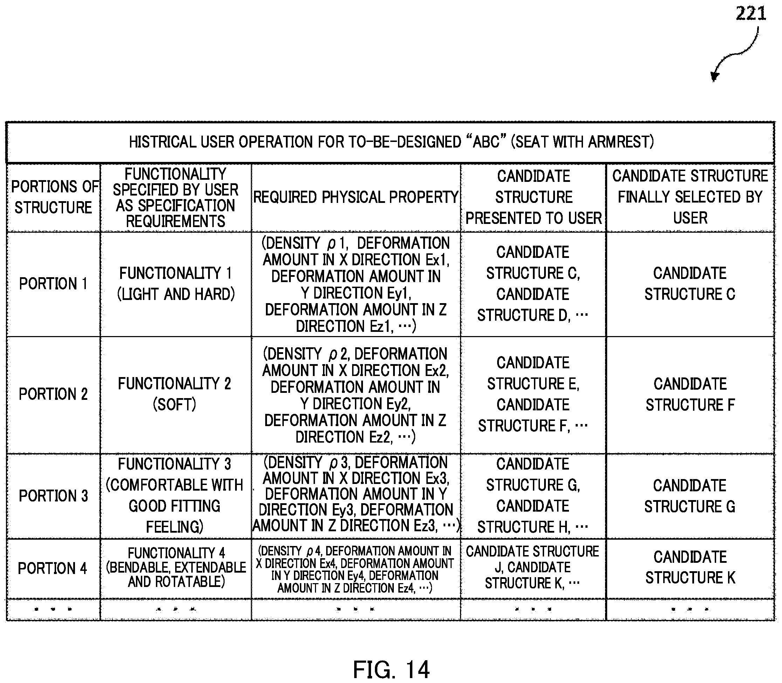

Specifically, historical operation data 221 illustrated in FIG. 14 is accumulated in the terminal 200 or the design aid server 100, and training data for supervised learning can be provided based on the historical operation data 221, for example.

The historical operation data 221 indicates a history of user's operations for the to-be-designed structure. Each record of the historical operation data 221 includes an item "portions of structure", an item "functionality specified by user as specification requirements", an item "required physical property", an item "candidate structure presented to user", and an item "candidate structures finally selected by user".

The item "portions of structure" indicates respective portions defined for the to-be-designed structure as described above.

The item "functionality specified by user as specification requirements" indicates the functionality and/or performance specified by a user as the specification requirements for respective portions of the to-be-designed structure.

The item "required physical property" indicates a result of conversion into physical properties imposed on the to-be-designed structure based on specification requirements specified by a user .

The item "candidate structure presented to user" indicates information for identifying candidate structures presented to a user.

The item "candidate structure finally selected by user" indicates candidate structures selected by a user among candidate structures presented to the user for designing the to-be-designed structure.

In FIG. 14, the items "portions of structure" and "functionality specified by user as specification requirements" can be registered based on specification data. Also, in FIG. 14, the item "required physical property" can be registered based on an output of the specification interpretation unit 112. In FIG. 14, the item "candidate structure presented to user" can be registered based on an output of the candidate determination unit 113 and/or the candidate presentation unit 114. Furthermore, in FIG. 14, the item "candidate structure finally selected by user" can be determined based on an output of the operation acquisition unit 115.

In this manner, the historical operation data 221 includes information regarding candidate structures finally specified by a user for respective portions of the to-be-designed structure for the user to design the structure.

Then, for example, it is assumed that a trained model is generated by machine learning (supervised learning) using training data where input data is information indicated in the item "functionality specified by user as specification requirements", and ground-truth label is information indicated in the corresponding item "candidate structure finally selected by user". By using the trained model, the candidate structures that may be finally selected by a user based on the functionality specified by the user can be directly determined and presented to the user.

### (Variation 3)

In the description of the exemplary screen in FIG. 13, as illustrated in the exemplary screens (B) and (C) in FIG. 13, a screen for a user to specify the specification requirements for specified respective portions of the to-be-designed structure (detail displaying regions 251A to 251E) is separated from a screen to display the candidate structures according to the specification requirements (252B to 252D).

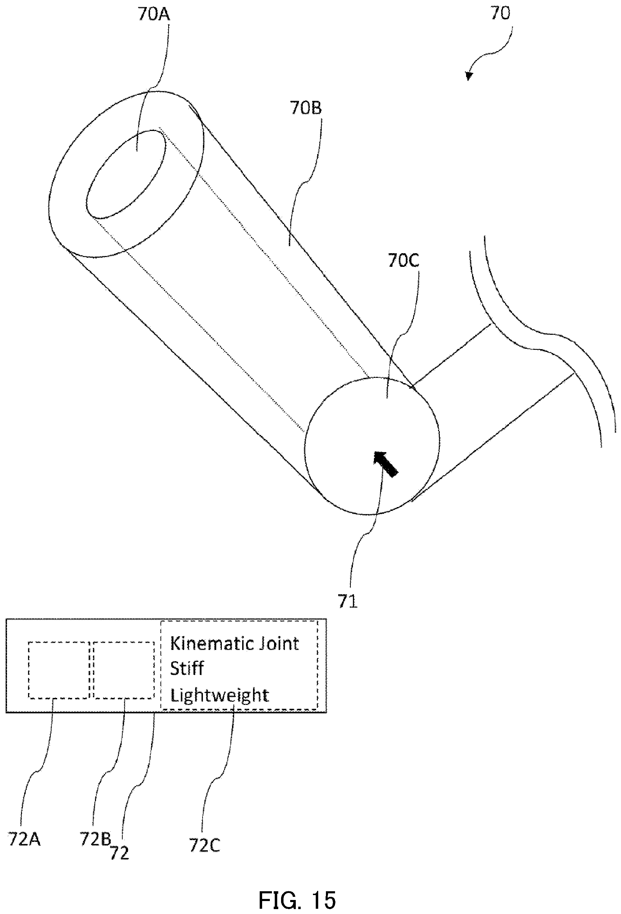

Besides, the arrangements as illustrated in FIGS. 15 to 18 may be used in an implementation for receiving operations by the user to specify respective portions of a three-dimensional structure and operations by the user to specify the specification requirements for the respective portions,.

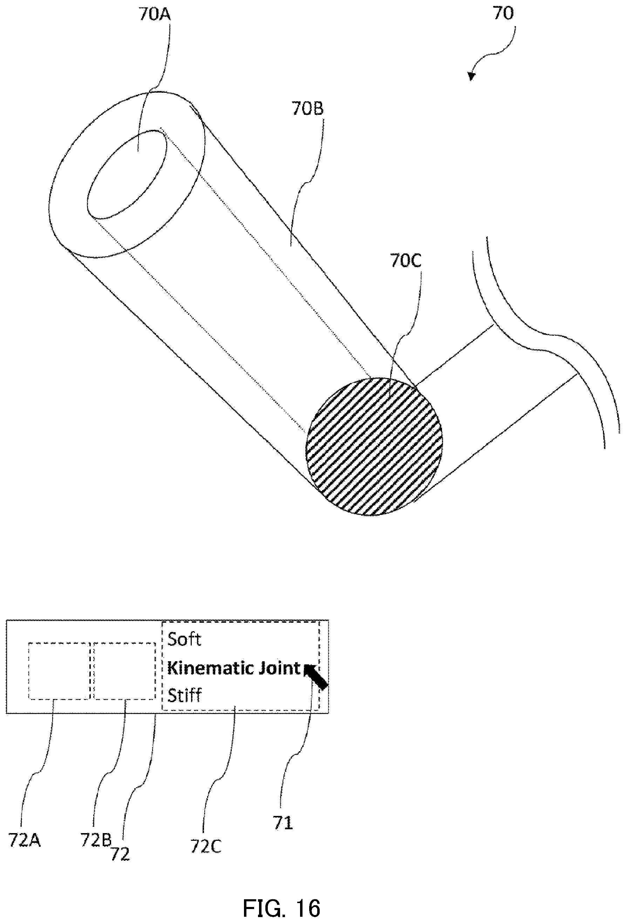

FIGS. 15 and 16 are diagrams illustrating exemplary screens at user's designing a structure. Similar to the example of FIG. 5, FIG. 15 illustrates a portion between a shoulder joint and an elbow joint and a part of portion between the elbow joint and a wrist as the 3D model modeled on an arm.

As illustrated in FIG. 15, the terminal 200 causes a display to display the 3D model 70 indicative of the to-be-designed three-dimensional structure and displays the respective portions (the first portion 70A, the second portion 70B and the third portion 70C) of the 3D model 70 such that the user can specify them.

Also, the terminal 200 displays a reception region 72 to receive specifications of the functionality and performance of the respective portions of the 3D model 70 as well as the to-be-designed three-dimensional structure (3D model 70). The reception region 72 includes an area to display candidate structures and receive a specification of a candidate structure from a user (candidate structure displaying regions 72A and 72B) and an area to receive a specification of the functionality and performance (specification reception region 72C).

The terminal 200 receives user's operations with a pointing device or the like, thus receives operations by the user to move a pointer 71C and specify the respective portions of the 3D model 70. As illustrated, it is assumed that the terminal 200 receives user's operations to move the pointer 71C and receives an operation to specify the third portion 70C. In response to these operations, the terminal 200 makes a transition from the screen of FIG. 15 to the screen of FIG. 16.

In FIG. 16, the terminal 200 displays the third portion 70C specified by the user so that it can be differentiated from other portions not-specified by the user (the first portion 70A and the second portion 70B). For example, the terminal 200 highlights the third portion 70C specified by the user, as illustrated.

In FIG. 16, the terminal 200 receives in the reception region 72 user's specifications of the functionality and performance for the third portion 70C specified by the user. As illustrated, the terminal 200 receives the user's specifications of the functionality and performance in verbal representations such as "soft", "kinematic joint", "stiff or the like, for example. In the illustrated example, the terminal 200 receives an operation to scroll the functionality and performance that can be specified by the user and receives a specification of the functionality and performance "kinematic joint" from the user in the indication reception region 72C. For example, the terminal 200 scrolls the functionality and performance that can be specified by the user upon receiving an operation to move the position indicated with a pointing device in the indication reception region 72C such as a flick operation, a drag operation or the like,.

The terminal 200 displays one or more candidate structures identified by the candidate determination unit 113 according to the functionality and performance specified by the user in the candidate structure displaying regions 72A and 72B. Each of the candidate structure displaying regions 72A and 72B displays an appearance of the candidate structure. Upon reception of an operation to specify the candidate structure displayed in either one of the candidate structure displaying regions 72A and 72B from the user, the terminal 200 displays an appearance for the third portion 70C for the case where the candidate structure specified by the user is applied to the third portion 70C specified by the user. The terminal 200 displays an appearance for the case where candidate structures specified by the user is applied. whenever the terminal 200 receives specifications of the candidate structures displayed in the candidate structure displaying regions 72A and 72B from the user. Also, whenever the user specifies the candidate structures, the terminal 200 displays a simulation result (a parameter indicative of the physical property and video data indicative of a movable range of the structure) simulated by the simulation unit 116 on a display.

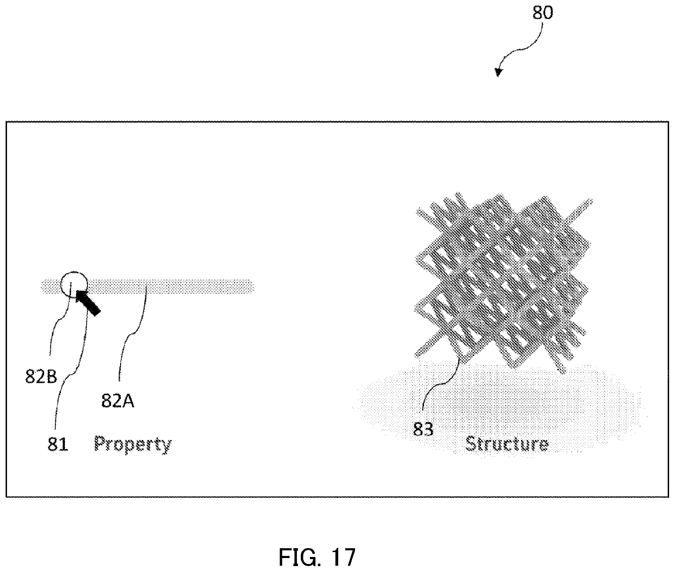

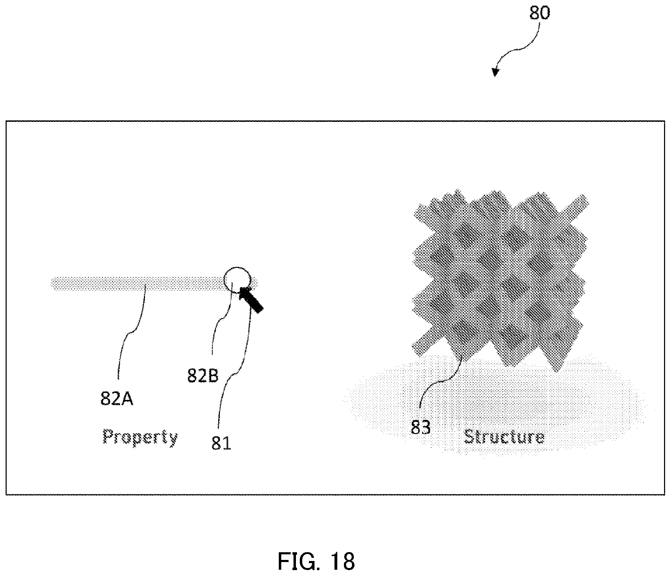

FIGS. 17 and 18 are diagrams illustrating a situation where a specification of the functionality and performance is received from a user.

As illustrated, the terminal 200 displays an operation reception region 80 on a display. The terminal 200 displays an appearance 83 of the candidate structure and a specification reception region 82A for receiving a specification of the functionality and performance in one-dimensional manner in the operation reception region 80 on a display. The terminal 200 receives an operation to move an amount 82B specified by the user with a pointer 81. In this manner, the terminal 200 receives a specification of a parameter for the functionality and performance from the user.

In comparison between FIG. 17 and FIG. 18, it is illustrated in the appearance 83 that the filling degree of the structure is changed by the specification of specification requirements by the user in the indication reception region 82A.

### (Variation 4)

In FIG. 13, an example, in which the simulation result presentation unit 217 displays a simulation result simulated based on a specified candidate structure in response to a specification of the candidate structure by the user, is described.

Here, if the user specifies a plurality of candidate structures, simulation results obtained based on the respective specified candidate structures may be displayed in a single screen together. In the example of FIG. 13, the simulation results obtained based on the candidate structures specified by the user are displayed in the exemplary screens (C) and (D), respectively, however these simulation results may be collectively displayed in a single screen in association with the respective candidate structures. In this manner, the user can compare the several simulation results to design a three-dimensional structure.

The above-described embodiments merely illustrate examples for assistance of understandings of the concept of the present invention and are not intended to limit the scope of the present invention. Addition, deletion or replacement of various components can be made in the embodiments without deviating from the spirit of the present invention.

Although several functional units have been described in the above-described embodiments, these are merely one exemplary implementation of the respective functional units. For example, several functional units described as being implemented in a single apparatus may be implemented across several separate apparatuses, and conversely the functional unit described as being implemented across different apparatuses may be implemented in a single apparatus.

The various functional units described in the above-described embodiments may be implemented by means of a circuitry. The circuitry may be a dedicated circuitry for implementing a certain functionality or a generic circuitry such as a processor.

At least one of the above-described operations of the respective embodiments can be implemented by using a processor such as a CPU and/or a GPU installed in a generic computer, a microcomputer, a FPGA or a DSP as basic hardware. Programs for implementing the above-described operations may be stored and provided in a computer-readable recording medium. The programs are stored in the recording medium as installable format files or executable format files. The recording medium may be a magnetic disk, an optical disc (a CD-ROM, a CD-R, a DVD or the like), a magneto-optical disk (MO or the like), a semiconductor memory and so on. The recording medium can store the programs and may be any computer-readable one. Also, the programs for implementing the above-described operations may be stored in a computer (server) connected to a network such as the Internet and be downloaded to the computer (server) via the network.

## Claims

1. A program executed by a computer including a processor, the program causing the processor to perform:
obtaining specification data indicative of a specification required for at least one of a functionality and a performance of a to-be-designed three-dimensional structure; and
determining a candidate structure based on the required specification from a database, wherein a parameter describing a physical property of respective candidate structures that differ from each other in terms of at least one of a material and a structure is registered in the database.

2. The program according to claim 1, wherein at least one of the registered candidate structures has anisotropy.

3. The program according to claim 1 or 2, wherein a parameter describing a response when an external force is applied to the respective candidate structures is registered in the database.

4. The program according to any one of claims 1 to 3, wherein a parameter describing a response when an external force is applied to the respective candidate structures in a first direction and a parameter describing a response when an external force is applied in a second direction different from the fist direction are registered in the database.

5. The program according to claim 4, wherein the required specification includes a response required when an external force is applied to the to-be-designed three-dimensional structure in each of different directions.

6. The program according to any one of claims 1 to 5, wherein the functionality includes an evaluation result of evaluation for a certain user experience.

7. The program according to any one of claims 1 to 6, further causing the processor to convert the required specification into criteria imposed on one or more physical properties, wherein the determining comprises determining a candidate structure satisfying the criteria from the database.

8. The program according to any one of claims 1 to 6, wherein the required specification includes criteria imposed on one or more physical properties, and the determining comprises determining a candidate structure satisfying the criteria from the database.

9. The program according to any one of claims 1 to 8, wherein the required specification can be specified for the entire of the to-be-designed three-dimensional structure or for respective portions thereof.

10. The program according to claim 9, further causing the processor to perform:
presenting information regarding the determined one or more candidate structures;
obtaining a first operation data for selecting a first candidate structure of the presented candidate structures;
obtaining a first simulation result by simulating at least one of a functionality and a performance achieved by the three-dimensional structure in a case where an entire or a portion of the three-dimensional structure for which the required specification is specified is composed of the first candidate structure, in response to an acquisition of the first operation data; and
presenting the first simulation result.

11. The program according to claim 10, further causing the processor to perform:
obtaining second operation data for selecting a second candidate structure of the determined one or more candidate structures after the presentation of the first simulation result;
obtaining a second simulation result by simulating at least one of a functionality and a performance achieved by the three-dimensional structure in a case where an entire or a portion of the three-dimensional structure for which the required specification is specified is composed of the second candidate structure, in response to an acquisition of the second operation data; and
presenting the second simulation result.

12. The program according to claim 10 or 11, wherein the first simulation result includes an evaluation result of a functionality based on one or more mechanical performances predicted to be achieved by the entire or the portion of the three-dimensional structure.

13. The program according to claim 1, wherein the obtaining comprises receiving an input of the specification data, and the program further causes the processor to perform presenting a simulation result of a functionality and a performance of the to-be-designed three-dimensional structure based on the determined candidate structure.

14. The program according to claim 13, wherein the obtaining comprises receiving specifications required for respective portions composing the to-be-designed three-dimensional structure as the specification data, and the determining comprises determining the candidate structures for the respective portions of the to-be-designed three-dimensional structure based on the specification data.

15. The program according to claim 13 or 14, wherein the obtaining comprises receiving an evaluation result regarding an experience of a user of the three-dimensional structure as the specification data, and the determining comprises determining the candidate structure based on the evaluation result regarding the experience.

16. The program according to any one of claims 13 to 15, wherein registration contents of the database include a physical parameter for a candidate structure having anisotropy, the obtaining comprises receiving information regarding the anisotropy as the specification data, and the presenting comprises presenting the simulation result including information indicative of the anisotropy if the candidate structure having the anisotropy is determined,.

17. The program according to claim 16, wherein registration contents of the database include at least one of information of a structure having a lattice structure and information of a structure having a compliant mechanism as a candidate structure having anisotropy for deformation.

18. The program according to any one of claims 13 to 17, wherein the presenting comprises presenting a parameter of a mechanical property of the three-dimensional structure as the simulation result of the functionality and the performance of the to-be-designed three-dimensional structure.

19. The program according to any one of claims 13 to 18, wherein the presenting comprises presenting a deformation amount when an external force is applied to the three-dimensional structure as the simulation result of the functionality and the performance of the to-be-designed three-dimensional structure so that a process of deformation is displayed visually.

20. The program according to any one of claims 13 to 19, wherein the determining comprises determining the plurality of candidate structures, and the presenting comprises presenting the plurality of determined candidate structures as being selectable, obtaining a simulation result of the functionality and the performance of the to-be-designed three-dimensional structure based on the selected candidate structure in response to selection of the candidate structure and presenting the obtained simulation result.

21. The program according to any one of claims 13 to 19, wherein the determining comprises determining the plurality of candidate structures, and the presenting comprises obtaining simulation results of the functionality and the performance of the to-be-designed three-dimensional structure based on the respective candidate structures for at least two candidate structures of the plurality of determined candidate structures and presenting the obtained simulation results in a single screen in association with respective ones of the at least two candidate structures.

22. A design aid apparatus, comprising:
a control unit; and
a memory unit,
wherein the control unit is configured to:
obtain specification data indicative of a specification required for at least one of a functionality and a performance of a to-be-designed three-dimensional structure; and
determine a candidate structure based on the required specification from a database, wherein a parameter describing a physical property of respective candidate structures that differ from each other in terms of at least one of a material and a structure is registered in the database.

23. A computer-implemented design aid method, comprising:
obtaining specification data indicative of a specification required for at least one of a functionality and a performance of a to-be-designed three-dimensional structure; and
determining a candidate structure based on the required specification from a database, wherein a parameter describing a physical property of respective candidate structures that differ from each other in terms of at least one of a material and a structure is registered in the database.
